(19) Europäisches Patentamt / European Patent Office / Office européen des brevets

(11) **EP 3 730 873 B1**

(12) **EUROPÄISCHE PATENTSCHRIFT**

(45) Veröffentlichungstag und Bekanntmachung des Hinweises auf die Patenterteilung:
**11.03.2026   Patentblatt 2026/11**

(21) Anmeldenummer: **20401000.3**

(22) Anmeldetag: **15.01.2020**

(51) Internationale Patentklassifikation (IPC):
**F25B 40/00** (2006.01)     **F25B 49/02** (2006.01)

(52) Gemeinsame Patentklassifikation (CPC):
**F25B 40/00; F25B 49/02;** F25B 2339/047;
F25B 2500/19; F25B 2600/0253; F25B 2600/2513;
F25B 2700/1931; F25B 2700/1933;
F25B 2700/21151; F25B 2700/21152;
F25B 2700/21163; F25B 2700/21175; Y02B 30/70

(54) **VERFAHREN ZUM BETREIBEN EINER WÄREMEPUMPE MIT EINEM DAMPFKOMPRESSIONSSYSTEM**

METHOD FOR OPERATING A HEAT PUMP WITH A VAPOUR COMPRESSION SYSTEM

PROCÉDÉ DE FONCTIONNEMENT D'UNE POMPE À CHALEUR DOTÉE D'UN SYSTÈME DE COMPRESSION DE VAPEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **08.03.2019   DE 102019001638**

(43) Veröffentlichungstag der Anmeldung:
**28.10.2020   Patentblatt 2020/44**

(73) Patentinhaber: **Stiebel Eltron GmbH & Co. KG
37603 Holzminden (DE)**

(72) Erfinder: **Herrs, Martin
37671 Höxter (DE)**

(56) Entgegenhaltungen:
EP-A1- 1 014 013          EP-A1- 2 505 939
EP-A1- 3 059 521          EP-A1- 3 351 870
EP-B1- 3 059 521          WO-A1-03/106900
WO-A1-2005/028225         WO-A1-2009/091400
WO-A1-2011/112411         WO-A2-2012/000501
JP-A- H01 102 255         US-A1- 2008 223 056
US-A1- 2013 074 535

**Beschreibung**

Die Erfindung betrifft ein Verfahren zum Betrieb einer Wärmepumpe mit einem Dampfkompressionssystem in welchem ein gasförmiges Kältemittel von einem mittels eines Reglers gesteuerten Verdichter von einem Niederdruck auf einen Hochdruck verdichtet wird. Das Kältemittel wird durch einen Verflüssiger getrieben, in dem es eine Heizwärme an ein in einem Wärmesenkensystem befindliches Heizmedium abgibt. Eine innere Wärme wird in einem Rekuperator beim unter dem Hochdruck vom Verflüssiger zum Expansionsventil strömenden Kältemittel auf das vom Verdampfer zum Verdichter unter dem Niederdruck strömende Kältemittel übertragen. Das Kältemittel wird weiter in einer Hochdruckströmungsrichtung zu einem vom Regler gesteuerten Expansionsventil geführt, in dem das Kältemittel vom Hochdruck auf den Niederdruck abhängig von einem Regelwert entspannt wird. Das auf dem Niederdruck befindliche Kältemittel verdampft in dem Verdampfer bei Aufnahme von Quellwärme.

Aus DE 101 59 892 A1 ist bei einer Kältemaschine bekannt, insbesondere bei einer Wärmepumpe, einen Rekuperator zu verwenden, womit bei niedrigen Außentemperaturen die Heizleistung auf baulich einfache Weise erhöht werden soll. Hierfür ist der Rekuperator derart dimensioniert, dass er bei niedrigen Verdampfungstemperaturen wenigstens etwa 15% der Heizleistung der Wärmepumpe vom flüssigen Kältemittel auf das gasförmige Kältemittel überträgt. Ein Einspritzventil spritzt flüssiges Kältemittel in den Verdichter, so dass die Verdichtungsendtemperatur unter 120 °C bleibt.

Eine Wärmepumpenanlage mit einem Kältemittelkreislauf ist aus DE 10 2005 061 480 B3 bekannt. Sie ist mit einem Verdichter, einem ersten Wärmeübertrager, einem Drosselorgan, einem Verdampfer und einer 4-2-Wegeventileinheit zum Umschalten zwischen einer ersten (Heizen) und einer zweiten Betriebsart (Kühlen) ausgestattet. Eine Strömungsrichtung des in dem Kältemittelkreislauf befindlichen Kältemittels kann derart umgeschaltet werden kann, dass der erste Wärmeübertrager in der ersten Betriebsart zum Verflüssigen des Kältemittels, und in der zweiten Betriebsart zum Verdampfen des Kältemittels dient, und der zweite Wärmeübertrager in der ersten Betriebsart zum Verdampfen des Kältemittels und in der zweiten Betriebsart zum Verflüssigen des Kältemittels dient, wobei der erste Wärmeübertrager im Kältemittelkreislauf so verschaltet ist, dass er in den beiden Betriebsarten Heizen und Kühlen als Gegenstrom-Wärmeübertrager arbeitet.

US 2008/223056 A1 offenbart ein Verfahren gemäß dem Oberbegriff des Anspruchs 1 und betrifft einen Kältekreislauf zum Umwälzen eines Kältemittels in einer vorgegebenen Strömungsrichtung, mit in Strömungsrichtung einen wärmeabgebenden Wärmetauscher, eine Verdampferdrosselklappe, einen Verdampfer, einen Verdichter, einen internen Wärmetauscher, der mit seiner "kalten Seite" zwischen Verdampfer und Kompressor angeordnet ist, ein zwischen Verdampfer und internem Wärmetauscher angeordneter Einlasstemperatursensor und ein Auslass Temperatursensor, der sich zwischen dem internen Wärmetauscher und dem Kompressor befindet, und eine Steuerung zum Steuern der Verdampferdrosselklappe basierend auf der Messung des Einlass- und Auslasstemperatursensors, wobei die Steuerung angepasst ist zum Steuern des Verdampferdrosselventils basierend auf einem Einlasstemperatur-Sollwert am Einlasstemperatursensor; und Verschieben des Einlasstemperatursollwerts basierend auf der Auslasstemperatursensormessung.

JP H01 102255 A stellt eine Brenngas-Dosiervorrichtung für einen Gasmotor bereit, die das Starten des Motors einfach und sicher durchführen kann. Ein Druckregler mit einem Unterdruck-Sperrmechanismus und ein Fliehkraftregler sind vorgesehen, der Unterdruck-Sperrmechanismus wird durch einen Ansaugunterdruck eines Motors betrieben, Brenngas wird auch einem Mischer zugeführt falls der Ansaugunterdruck kleiner als ein vorgeschriebener Wert ist, wird die Zufuhr von Brenngas unterbrochen. Im Druckregler ist zusätzlich eine elektrische Entriegelungseinrichtung vorgesehen, dieser elektrischen Entriegelungseinrichtung ist ein Umschalten in eine Startstellung eines Startschalters des Motors zugeordnet, die Unterbrechung des Brenngases durch den Unterdruck-Sperrmechanismus wird aufgehoben

EP 1 014 013 A1 offenbart, dass in einem Kältekreislauf vom Dampfkompressionstyp, der Kohlendioxid als Kältemittel verwendet, ein Überhitzungsregelventil zwischen einen Verdampfer und einen internen Wärmetauscher geschaltet ist. Das Überhitzungssteuerventil dient zum Einstellen der Durchflussmenge eines dem Verdampfer zugeführten Flüssigphasenteils des Kältemittels gemäß einem Steuersignal, um einen Überhitzungsgrad eines einem Kompressor zugeführten Gasphasenteils eines Kältemittels zu halten. Thermistoren erfassen Temperaturen des Gasphasenteils und eines verdampften Teils, der aus dem Verdampfer ausströmt, des Kältemittels, um ein erstes bzw. ein zweites Temperatursignal zu erzeugen. Ein Temperatur-/Drucksensor erfasst einen Zustand eines abgestrahlten Teils, der von einem Kühler ausströmt, des Kältemittels, um einen Kältemittelzustandswert zu erzeugen. Ein Selektor wählt als ausgewähltes Signal eines der ersten und zweiten Temperatursignale in Übereinstimmung mit dem Kältemittelzustandswert aus, um das ausgewählte Signal als das Steuersignal an das Überhitzungssteuerventil zu liefern.

US 2013/074535 A1 offenbart ein Dampfkompressionssystem umfassend einen Kompressor, einen Kondensator, eine Expansionsvorrichtung, z.B. in Form eines Expansionsventils und eines entlang eines Kältemittelpfads angeordneten Verdampfers. Ein Verfahren zum Betreiben des Dampfkompressionssystems umfasst die Schritte: Erhalten eines Überhitzungswerts, der für die Überhitzung des in den Kompressor eintretenden Kältemittels repräsentativ ist; Erhalten eines Unterkühlungswerts, der für die Unterkühlung des in die Expansionsvorrichtung eintretenden Kältemittels repräsentativ ist; und Betreiben der Expansionsvorrichtung auf der Grundlage des erhaltenen Überhitzungswerts und auf der Grundlage des erhaltenen Unterkühlungswerts. Der Unterkühlungswert wird beim Betrieb der Expansionseinrichtung berücksichtigt, da Schwankungen des Unterkühlungswerts bei einem gegebenen Öffnungsgrad der Expansionseinrichtung einen erheblichen Einfluss auf die Kälteleistung des Verdampfers haben und somit zu einem stabileren Betrieb der Anlage führen. Das System kann ferner einen internen Wärmetauscher umfassen.

WO 03/106900 A1 betrifft ein Verfahren zur Steuerung eines Carnot-Kreisprozesses in einer Anlage, bei der in einem Arbeitsmittelkreislauf zumindest angeordnet sind: ein Verdichter, ein Kondensator, ein Expansionsventil und ein Verdampfer sowie einem internen Wärmetauscher. Dieser wird vom kondensierten Arbeitsmedium, das vom Kondensator abströmt, und vom Arbeitsmedium, das vom Verdampfer abströmt, durchströmt. Im inneren Wärmetauscher wird das gasförmige Arbeitsmedium überhitzt und das kondensierte Arbeitsmedium unterkühlt, wobei die Überhitzung des Arbeitsmediums mittels des Expansionsventils geregelt wird. Um die Leistung zu verbessern, werden beispielsweise 10 bis 30 % der Gesamtverdampfung des Arbeitsmediums in dem als Mehrzug-Zusatzverdampfer ausgebildeten internen Wärmetauscher durchgeführt.

Viele Verdichter sind ungeeignet, am Verdichtereintritt gesättigten Dampf anzusaugen, deshalb schreiben viele Verdichterhersteller vor, eine Mindestüberhitzung des Kältemittels am Verdichtereintritt sicherzustellen, beispielsweise eine Mindestüberhitzung von 2 Kelvin, wobei ebenfalls bei Kältemitteln mit einem Temperaturglide eine Mindestüberhitzung einzuhalten ist.

Werden Anforderung bezüglich einer Mindestüberhitzung nicht eingehalten, kann ein erhöhter Verdichterverschleiß durch mangelnde Schmierung der Kompressionskomponenten oder Schäden durch Kavitation durch Nachverdampfung im Verdichter zur Folge haben.

Eine Erhöhung der Überhitzung des Kältemittels am Verdichtereintritt korrespondiert in etwa im gleichen Maß mit einer Erhöhung der Kältemittelaustrittstemperatur aus dem Verdichter.

Die Kältemittelaustrittstemperatur hat Einfluss auf die thermische Belastung der Verdichterkomponenten und des im Kältekreis befindliche Öl, so dass der Verdichterhersteller einen oberen Grenzwert für zulässige Kältemittelaustrittstemperatur aus dem Verdichter vorschreibt.

Aufgabe der Erfindung ist es ein Regelverfahren vorzuschlagen, welches einen Dampfkompressionskreis so betreibt, dass ein optimaler Gesamtwirkungsgrad erzielt wird.

Eine weitere Aufgabe der Erfindung ist es ein gutes Regelverhalten auch bei Kältemitteln bestehend aus wenigstens zwei Stoffen, insbesondere bei Beaufschlagung von Störgrößen wie Änderung der Betriebsbedingungen bei Temperaturänderungen im Wärmequellenkreis, Wärmesenkensystem oder Änderung der Verdichterleistung zu erzielen.

Gelöst wir die Aufgabe durch die Verfahrensmerkmale des Anspruchs 1. Bevorzugte Ausgestaltungen sind in den abhängigen Ansprüchen beschrieben.

Eine Regelgröße der Verdampferaustrittsüberhitzung wird berechnet. Mit einem Zielwert für eine Verdampferaustrittsüberhitzung wird eine Regelabweichung Verdampferaustrittsüberhitzung berechnet. Eine Regelgröße Verdichtereintrittsüberhitzung wird berechnet. Mit einem Zielwert für eine Verdichtereintrittsüberhitzung wird eine Regelabweichung Verdichtereintrittsüberhitzung berechnet. Der Regelwert R wird aus einem gewichteten Einfluss der Regelabweichung Verdampferaustrittsüberhitzung und einem gewichteten Einfluss der Regelabweichung Verdichtereintrittsüberhitzung berechnet. Das Expansionsventil wird mit dem Regelwert geregelt.

Eine weitere vorteilhafte Methode ist es, die Subtraktion "invers" zu vollziehen, wobei zur Bildung der Regelabweichungen vom Sollwert der Istwert subtrahiert wird. Die Regelabweichung wird vorteilhaft durch Berechnung oder Bildung einer Differenz zwischen einem "Istwert" und einem "Sollwert" berechnet.

Gemäß einem erfindungsgemäßen Verfahrensschritt wird die Verdampferaustrittsüberhitzung gegenüber der Verdichtereintrittsüberhitzung zur Ermittlung des Regelwertes mit einem Parameter gewichtet. Besonders vorteilhaft werden die Regelabweichungen einer Verdampferaustrittsüberhitzung oder der Verdichtereintrittsüberhitzung von einem Sollwert gewichtet.

In einem anderen vorteilhaften Verfahrensschritt erfolgt eine Gewichtung der Verdampferaustrittsüberhitzung gegenüber einer Gewichtung der Verdichtereintrittsüberhitzung zur Ermittlung der Regelgröße mittels eines Parameters. Besonders vorteilhaft werden die Regelabweichungen einer Verdampferaustrittsüberhitzung oder einer Verdichtereintrittsüberhitzung mit einem Sollwert gewichtet.

In einer weiteren vorteilhaften Ausgestaltung des Verfahrens wird die Verdampferaustrittsüberhitzung aus einem Verdampferaustrittstemperaturmesswert, der mit einem Verdampferaustrittstemperatursensor gemessen wird, und aus einem Niederdruck, der mit einem Niederdrucksensor gemessen wird, ermittelt.

In einem weiteren bevorzugten Verfahrensschritt wird die Verdichtereintrittsüberhitzung aus einer Verdichtereintrittstemperatur, gemessen mit einem Verdichtereintrittstemperatursensor, und einem Niederdruck, der mit einem Niederdrucksensor gemessen wird, ermittelt.

In einem vorteilhaften Verfahrensschritt wird im Regler eine erste Regelabweichung der Verdichtereintrittsüberhitzung mit einer zweiten Regelabweichung der Verdampferaustrittsüberhitzung zu einer gesamt Regelabweichung berechnet und die gesamt Regelabweichung zur Einstellung des Expansionsventils verwendet.

Erfindungsgemäß wird das Verfahren so ausgeführt, dass der Parameter nach der Inbetriebnahmephase gleitend geändert wird, wobei eine Wichtung mittels eines Wichtungskoeffizienten der Verdichtereintrittsüberhitzung mit einem Einfluss von weniger als 20 % gegenüber der Verdampferaustrittsüberhitzung beginnt. Auf die Ermittlung des Regelwertes wird die Wichtung dann ändernd, insbesondere ansteigend, berücksichtigt, insbesondere bis zu einer vorgegebenen Zielwichtung des Parameters. Gemäß der Erfindung wird während der Inbetriebnahmephase der Wichtungskoeffizient der Verdichtereintrittsüberhitzung auf einen gegenüber der Betriebsphase kleinen Wert zwischen 0 % und 20 % eingestellt und nach Ablauf der Inbetriebnahmephase steigt er rampenförmig mit der Zeit auf einen Zielwert für die Betriebsphase an.

In einer zeitlich begrenzten Inbetriebnahmephase nach einem Einschalten des Verdichters der Parameterwert vorteilhaft so gesteuert wird, dass die Gewichtung der Verdichtereintrittsüberhitzung zur Ermittlung der Regelgröße einen Einfluss von 0 % oder nahe 0 % hat, insbesondere unter 20 % hat. Damit wird ausschließlich oder maßgeblich die Verdampferaustrittsüberhitzung in die Regelgröße einbezogen. In einer darauffolgenden Übergangsphase wird der Parameter P so gesteuert wird, dass die Gewichtung der Regelgröße der Verdichtereintrittsüberhitzung zur Ermittlung der Regelgröße bis zu einem Zielwert erhöht wird und in der darauffolgenden Betriebsphase die Gewichtung Verdichtereintrittsüberhitzung den Zielwert erreicht.

Weiterhin ist es von Vorteil, den Zielwert für die Gewichtung der Regelgröße abhängig von einer Verdichtereintrittsüberhitzung in Betriebsphasen im eingeschwungenen Zustand des Dampfkompressionssystem zu variieren.

Die Figuren zeigen ein Ausführungsbeispiel:

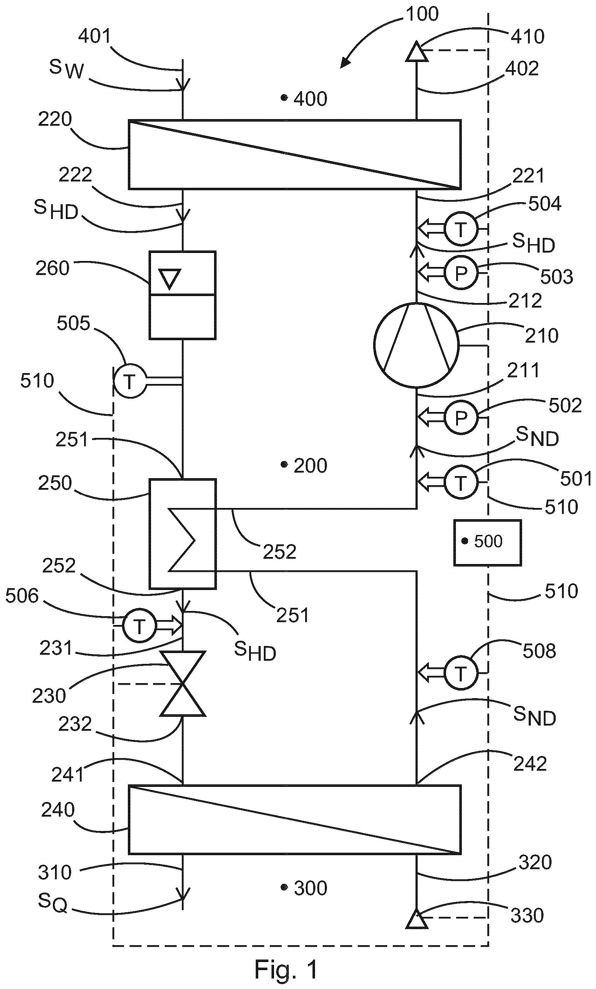

Fig. 1    Wärmepumpe 100 mit einem Dampfkompressionskreislauf 200

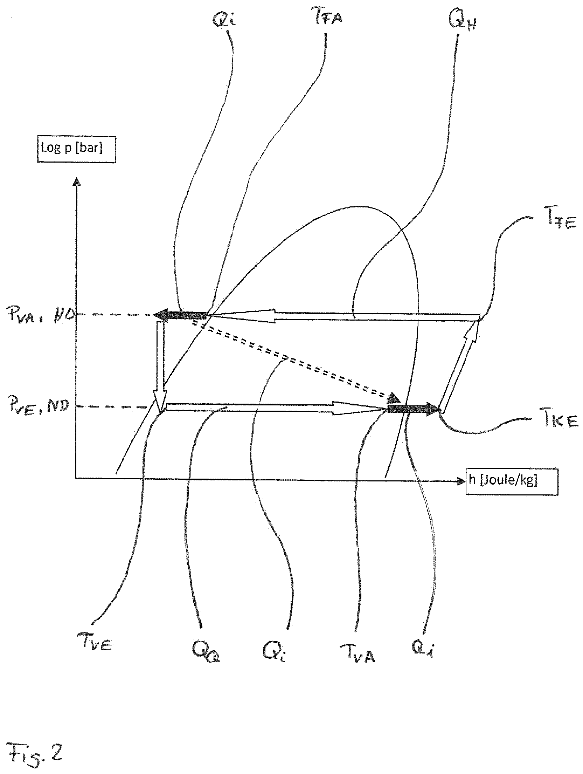

Fig. 2    log p / h - Diagramm des Dampfkompressionsprozesses mit Rekuperator 250

Die Wärmepumpe 100 besteht im Wesentlichen aus einem Dampfkompressionssystem 200, welches folgende Komponenten enthält:

- Einen Verdichter 210 zum Verdichten des überhitzten Kältemittels,
- einen Verflüssiger 220, mit einem kältemittelseitigem Verflüssigereintritt 221 und einem Verflüssigeraustritt 222 zur Übertragung von Wärmeenergie $Q_H$ aus dem Dampfkompressionssystem 200 an ein Heizmedium eines Heizsystems 400, mit einem Heizmediumeintritt 401, einem Heizmediumaustritt 402 und einer Heizmediumpumpe 410, zu einer Gebäudeheizung oder ein System zur Warmwassererhitzung,
- vorteilhaft einen Kältemittelsammler 260, welcher als Kältemittelreservoir zum Ausgleich von betriebsbedingungsabhängig unterschiedlich hohen Kältemittelmengenbedarfen verwendet wird,
- ein Expansionsventil 230 zum Expandieren des Kältemittels,
- einen Verdampfer 240, mit einem Verdampfereinlass 241, zur Übertragung von Quellenenergie $Q_Q$ aus einem Wärmequellensystem 300, mit einem Wärmequelleinlass 320 und einem Wärmequellauslass 310, wobei das Wärmequellsystem 300 insbesondere ein Solesystem sein kann, welches Wärmeenergie $Q_Q$ aus dem Erdreich aufnimmt oder ein Luftsystem, welches Wärmeenergie $Q_Q$ aus der Umgebungsluft aufnimmt und an das Dampfkompressionssystem 200 abgibt oder eine beliebige andere Wärmequelle,
- einen Rekuperator 250, welcher dazu bestimmt ist, innere Wärmeenergie $Q_i$ zwischen dem vom Verflüssiger 400 zum Expansionsventil 230 strömenden Kältemittel auf das vom Verdampfer 240 zum Verdichter 210 strömende Kältemittel zu übertragen und
- ein Kältemittel, insbesondere ein Kältemittelgemisch aus wenigsten zwei Stoffen oder zwei Kältemitteln welches in einer Strömungsrichtung $S_{HD}$ und $S_{ND}$ durch den Dampfkompressionskreis 200 strömt, wobei im Dampfkompressionskreislauf 200 Kältemitteldampf durch den Verdichter 210 auf einen Hochdruck HD gebracht wird und zu einem Verflüssiger 220 geführt ist, wobei ein Hochdruckpfad mit der Hochdruckströmungsrichtung $S_{HD}$ vom Verdichter 210 bis zum Expansionsventil 230 gebildet ist. Nach dem Expansionsventil 230 bis zum Verdichter 210 ist ein Niederdruckpfad mit einer Niederdruckströmungsrichtung $S_{ND}$ des Kältemittels gebildet, in dem der Verdampfer 240 liegt.

Die folgend aufgelisteten Aktoren sind vorteilhaft zumindest teilweise mit dem Regler über eine Datenverbindung 510, die per Kabel, Funk oder andere Technologien erfolgen kann, verbunden: Verdichter 210, Heizmediumpumpe 410, Solepumpe 330, Expansionsventil 230, Verdichtereintrittstemperatursensor 501, Niederdrucksensor 502, Hochdrucksensor 503 Heißgastemperatursensor 504, Rekuperatoreintrittstemperatursensor 505 Rekuperatoraustrittstemperatursensor 506, Verdampfereintrittstemperatursensor 507 und /oder Verdampferaustrittstemperatursensor 508.

Der Verdichter 210 dient zur Kompression des überhitzten Kältemittels von einem Eintrittsanschluss 211 auf einen Verdichteraustrittsdruck $P_{va}$ bei einer Verdichteraustrittstemperatur $T_{Va}$ am Verdichteraustritt 212. Der Verdichter 210 enthält üblicher Weise eine Antriebseinheit mit einem Elektromotor, eine Kompressionseinheit und vorteilhaft kann der Elektromotor drehzahlvariabel betrieben werden. Die Kompressionseinheit kann als Rollkolbeneinheit, Scrolleinheit oder anders ausgeführt sein. Am Verdichteraustritt 212 ist das komprimierte überhitzte Kältemittel beim Verdichteraustrittsdruck $P_{Va}$ auf einer höheren Drucklage, insbesondere einem Hochdruck HD, als am Eintrittsanschluss 211 mit einem Verdichtereintrittsdruck $P_{Ve}$, insbesondere einem Niederdruck ND, bei einer Verdichteter Eintrittstemperatur $T_{VE}$, was den Zustand am Eintrittsanschluss 211 in eine Kompressionskammer beschreibt.

Im Verflüssiger 220 erfolgt die Übertragung von Wärmeenergie $Q_H$ vom Kältemittel des Dampfkompressionssystem 200 an ein Heizmedium des Wärmesenkensystems 400. Zunächst findet im Verflüssigter 220 die Enthitzung des Kältemittels statt, wobei überhitzter Kältemitteldampf durch eine Temperaturreduzierung einen Teil seiner Wärmeenergie an das Heizmedium des Wärmesenkensystems 400 überträgt.

Nach der Enthitzung des Kältemitteldampfes erfolgt vorteilhaft im Verflüssiger 220 eine weitere Wärmeübertragung $Q_H$ durch Kondensation des Kältemittels beim Phasenübergang von der Gasphase des Kältemittels auf die Flüssigphase des Kältemittels. Dabei wird weitere Wärme $Q_H$ vom Kältemittel aus dem Dampfkompressionssystem 200 an das Heizmedium des Wärmesenkensystems 400 übertragen.

Der sich im Verflüssiger 220 einstellende Hochdruck HD des Kältemittels korrespondiert im Betrieb des Verdichters 210 in etwa mit einem Kondensationsdruck des Kältemittels bei einer Heizmediumtemperatur $T_{WS}$ im Wärmesenkensystem.

Das Heizmedium, insbesondere Wasser, wird mittels einer Heizmediumpumpe 410 durch das Wärmesenkensystem 400 in einer Richtung SW durch den Verflüssiger 220 gefördert, dabei wird die Wärmeenergie $Q_H$ vom Kältemittel auf das Heizmedium übertragen.

Im nachfolgenden Sammler 260 wird aus dem Verflüssiger 220 austretendes Kältemittel gespeichert, welches abhängig vom Betriebspunkt des Dampfkompressionskreises 200 nicht in das zirkulierende Kältemittel eingespeist werden soll. Wird aus dem Verflüssiger 220 mehr Kältemittel eingespeist, als durch das Expansionsventil 230 weitergeleitet wird, füllt sich der Sammler 260, anderenfalls wird er leerer oder entleert.

Im nachfolgenden Rekuperator 250, der auch als interner Wärmeübertrager bezeichnet werden kann, wird interne Wärmeenergie $Q_i$ vom unter dem Hochdruck HD stehenden Kältemittel, welches vom Verflüssiger 220 zum Expansionsventil 230 in einer Hochdruck-Strömungsrichtung $S_{HD}$ strömt, auf das unter dem Niederdruck ND strömende Kältemittel übertragen, welches vom Verdampfer zum Verdichter in einer Niederdruckströmungsrichtung $S_{ND}$ strömt, übertragen. Dabei wird das vom Verflüssiger zum Expansionsventil 230 strömende Kältemittel in vorteilhafter Weise unterkühlt.

Zunächst strömt das Kältemittel durch einen Expansionsventileintritt 231 in das Expansionsventil ein. Im Expansionsventil 230 erfolgt eine Drosselung des Kältemitteldruckes vom Hochdruck HD auf den Niederdruck ND, indem das Kältemittel vorteilhaft eine Düsenanordnung oder Drossel mit einem vorteilhaft variablem Öffnungsquerschnitt passiert, wobei der Niederdruck vorteilhaft in etwa ein Saugdruck des Verdichters 210 entspricht. Anstelle eines Expansionsventils 230 kann auch eine andere beliebige Druckminderungseinrichtung eingesetzt sein. Vorteilhaft sind Druckminderungsrohre, Turbinen oder andere Entspannungsvorrichtungen.

Ein Öffnungsgrad des Expansionsventils 230 wird durch einen Elektromotor, der üblicherweise als Schrittmotor ausgeführt ist eingestellt, welcher durch die Regelung 500 gesteuert wird. Dabei wird der Niederdruck ND beim Expansionsventilaustritt 232 des Kältemittels aus dem Expansionsventil 230 so gesteuert, dass der sich einstellende Niederdruck ND des Kältemittels im Betrieb des Verdichters 210 in etwa mit dem Verdampfungsdruck des Kältemittels mit der Wärmequellenmedientemperatur $T_{WQ}$ korrespondiert. Vorteilhaft wird die Verdampfungstemperatur des Kältemittels wenige Kelvin unterhalb der Wärmequellenmedientemperatur $T_{WQ}$ liegen, damit die Temperaturdifferenz eine Wärmeübertragung treibt.

Im Verdampfer erfolgt eine Übertragung von Verdampfungswärmeenergie $Q_V$ vom Wärmequellenfluid des Wärmequellensystems 300, welches ein Solesystem, ein Erdwärmesystem zur Nutzung von Wärmeenergie $Q_Q$ aus dem Erdreich, ein Luftsystem zur Nutzung von Energie $Q_Q$ aus der Umgebungsluft oder eine andere Wärmequelle sein, die die Quellenergie $Q_Q$ an das Dampfkompressionssystem 200 abgibt.

Das in den Verdampfer 240 einströmende Kältemittel reduziert beim Durchströmen des Verdampfers 240 durch Wärmeaufnahme $Q_Q$ seinen Nassdampfanteil und verlässt den Verdampfer 240 vorteilhaft mit einem geringen Nassdampfanteil oder vorteilhaft auch als überhitztes gasförmiges Kältemittel. Das Wärmequellenmedium wird mittels einer Solepumpe 330 bei Sole - Wasser-Wärmepumpen oder einem Aussenluftventilator bei Luft/Wasser-Wärmepumpen durch den Wärmequellenmedienpfad des Verdampfers 240 gefördert, wobei beim Durchströmen des Verdampfers dem Wärmequellenmedium die Wärmeenergie $Q_Q$ entzogen wird.

Im Rekuperator 250 wird Wärmeenergie $Q_i$ zwischen dem vom Verflüssiger 220 zum Expansionsventil 230 strömenden Kältemittel auf das vom Verdampfer 240 zum Verdichter 210 strömenden Kältemittel zu übertragen, wobei das vom Verdampfer 240 zum Verdichter 210 strömende Kältemittel insbesondere weiter überhitzt.

Dieses überhitzte Kältemittel, welches mit einer Überhitzungstemperatur $T_{Ke}$ aus dem Rekuperator 250 austritt, wird zum Kältemitteleintrittsanschluss 211 des Verdichters 210 geleitet.

Der Rekuperator 250 ist im Dampfkompressionskreis 200 eingesetzt, um den Gesamt - Wirkungsgrad als Quotient aus abgegebener Heizleistung $Q_H$ und aufgenommener elektrischer Leistung $P_e$ zum Antrieb des Verdichter-

motors zu erhöhen.

Zu diesem Zweck wird dem Kältemittel, welches im Verflüssiger 220 Wärmeenergie $Q_H$ auf einem wärmesenkenseitigen Temperaturniveau an das Heizmedium abgibt, im Hochdruckpfad des Rekuperators 250 durch Unterkühlung weitere Wärmeenergie $Q_i$ entzogen.

Der innere Energiezustand des Kältemittels beim Eintritt in den Verdampfer 240 ist durch diesen Wärmeentzug $Q_i$ reduziert, sodass das Kältemittel bei gleichem Verdampfungstemperaturniveau mehr Wärmeenergie $Q_Q$ aus der Wärmequelle 300 aufnehmen kann.

Anschließend wird dem Kältemittel, nach dem Verdampferauslass 242 aus dem Verdampfer 240, im Niederdruckpfad bei Niederdruck ND und bei einer Niederdrucktemperatur $T_{Va}$ im Rekuperator 250 die im Hochdruckpfad entzogene Wärmeenergie Qi wieder zugeführt. Die Zuführung der Energie bewirkt vorteilhaft eine Reduzierung des Nassdampfanteils auf einen Zustand ohne Nassdampfanteil und dann erfolgt durch weitere Energiezuführung eine Überhitzung.

Des Weiteren sind zur Erfassung des Betriebszustandes des Dampfkompressionssystems 200 vorteilhaft folgende Sensoren angeordnet, mit denen insbesondere zur Absicherung der Betriebsbedingungen des Dampfkompressionssystems 200 eine modellbasierte Vorsteuerung umgesetzt ist. Einerseits erfolgt vorteilhaft mit Hilfe der durch Sensoren erfassten Prozesswerte eine Absicherungen bezüglich zulässiger Arbeitsbereiche der Komponenten wie insbesondere dem Verdichter 210 durchgeführt und andererseits erfolgt basiert auf den Sensordaten modellbasierte Vorsteuerungen insbesondere einer Drehzahl des Verdichters 210 und/oder einem Ventilöffnungsgrad des Expansionsventils, so dass die Regler zur Ausregelung einer sich dennoch, durch die Vorsteuerung aber kleineren Regelabweichung, nur noch kleinere Korrekturen durchführen muss:

- Ein Hochdrucksensor 503 vorteilhaft zur Erfassung des Hochdrucks HD des Kältemittels am Verdichteraustritt 212, oder zwischen dem Verdichteraustritt 212 und dem Expansionsventileintritt 231,
- ein Heißgastemperatursensor 504 vorteilhaft zur Erfassung einer Heißgastemperatur $T_{HG}$ des Kältemittels am Verdichteraustritt 212, oder im Kältekreisabschnitt zwischen dem Verdichteraustritt 212 und dem Verflüssigereintritt 221,
- ein Innentemperatursensor 506 vorteilhaft zur Erfassung der Innentemperatur Tle des Kältemittels zwischen dem hochdruckseitigem internen Rekuperatorauslass 252 des Kältemittels aus dem Rekuperator 250 und dem Expansionsventileitritt 231. Die Innentemperatur ist vorteilhaft auch als "Rekuperatoraustrittstemperatur Hochdruckpfad" benannt und
- vorteilhaft ein Rekuperatorinnentemperatursensor 505. Der Rekuperatorinnentemperatursensor 505 erfasst vorteilhaft Verflüssigeraustrittstemperatur $T_{FA}$ des Kältemittel in der Strömungsrichtung am Verflüssigeraustritt oder dem hochdruckseitigen Rekuperatoreintritt und daher wird vorteilhaft die Verflüssigeraustrittstemperatur $T_{FA}$ vom Rekuperatorinnentemperatursensor 505 gemessen.

Die folgenden Sensoren sind insbesondere für die Durchführung des erfindungsgemäßen Verfahrens erforderlich:

- Ein Niederdrucksensor 502 zur Erfassung des Niederdrucks ND des Kältemittels am Verdichtereintritt 211, oder zwischen dem Expansionsventil 230 und dem Verdichtereintritt 211,
- ein Verdampferauslasstemperatursensor 508 zur Erfassung der Verdampferauslasstemperatur $T_{Va}$ des Kältemittels am Verdampferauslass 242 oder zwischen dem Verdampferauslass 242 und dem niederdruckseitigen Eintritt des Kältemittels in den Rekuperatoreinlass 251 des Rekuperators 250 und
- ein Niederdrucktemperatursensor 501 misst vorteilhaft eine Verdichtereintrittstemperatur oder dient vorteilhaft zur Erfassung der Kältemittelniederdrucktemperatur $T_{ND}$ oder vorteilhaft einer Verdichtereintrittstemperatur $T_{KE}$ am Verdichtereintritt 211, oder zwischen dem niederdruckseitigem Rekuperatorauslass 252 des Kältemittels aus dem Rekuperator 250 und dem Verdichtereintritt 211.

Die Prozessgröße, welche einen maßgeblichen Einfluss auf den Gesamt - Wirkungsgrad des Dampfkompressionskreises 200 als Quotient zwischen der vom Dampfkompressionskreis 200 übertragenen Heizleistung QH zu einer vom Verdichter 210 aufgenommenen elektrischen Leistung $P_e$ hat, ist die Überhitzung des Kältemittels am Verdichtereintritt 211. Zur Einhaltung zulässiger Verdichter - Betriebsbedingungen werden vorteilhaft allerdings Beschränkungen bezüglich des erlaubten Überhitzungsbereiches des Kältemittels am Verdichtereintritt eingehalten. Zu niedrige Überhitzungen gefährden insbesondere die Schmiereigenschaften des Maschinenöls, zu hohe Überhitzungen bewirken insbesondere eine zu hohe Heißgastemperatur.

Die Überhitzung beschreibt die Temperaturdifferenz zwischen der erfassten Verdichtereintrittstemperatur $T_{KE}$ des Kältemittels und der Verdampfungstemperatur des Kältemittels bei gesättigtem Dampf.

Diese Grenzwerte, insbesondere für die Überhitzung, legen arbeitspunktabhängig den zulässigen Überhitzungsbereich der Komponenten am Verdichtereintritt 211 fest. Weiterhin bestehen aber auch Abhängigkeiten zwischen der Verdichtereintrittsüberhitzung $T_{\ddot{U}E}$ und dem Gesamtwirkungsgrad des Dampfkompressionskreises 200 oder auch zwischen Verdichtereintrittsüberhitzung $T_{\ddot{U}E}$ und einer Stabilität S eines Regelwertes R vorteilhaft bei der Ausregelung der Verdichtereintrittsüberhitzung.

Zur Berücksichtigung all dieser Anforderungen werden vorteilhaft in Abhängigkeit des Arbeitspunktes des Dampfkompressionskreises 200, die Wärmequellenmedientemperatur, die Heizmediumtemperatur, die Verdichterleistung $P_e$ und Zielwerte Z oder der Zielwert Z für eine Berechnung der Verdichtereintrittsüberhitzung $T_{\ddot{U}E}$ herangezogen. Im einfachsten Fall ist der Zielwert für die Verdichtereintrittsüberhitzung $T_{\ddot{U}E}$ unabhängig von allen Betriebsbedingungen konstant, z.B. 10 Kelvin. Bei einer komplexeren Anpassung wird er als Funktion einer Arbeitspunktgröße, z.B. der Verdichterleistung $P_e$ variiert oder bei noch komplexerer Anpassung variiert er als Funktion mehrerer Arbeitspunktgrößen.

Es wird eine Verdichtereintrittsüberhitzung $T_{\ddot{U}E}$ gewichtet und mit der Verdampferaustrittsüberhitzung $T_{\ddot{U}A}$ ermittelt, woraus im Regler 500 eine Gesamtregelabweichung berechnet wird, welche zur Regelung des Dampfkompressionskreises 200 eingespeist wird. Vorteilhaft präziser werden zunächst die Regelabweichungen von der Verdichtereintrittsüberhitzung $T_{\ddot{U}E}$ und Verdampferaustrittsüberhitzung $T_{\ddot{U}A}$ durch die Bildung der Differenzen zwischen den jeweiligen Messwerten und Zielwerten gebildet.

- Verdichtereintrittsüberhitzung $T_{\ddot{U}E}$ = Messwert Verdichtereintrittsüberhitzung - Zielwert Verdichtereintrittsüberhitzung $Z_{T\ddot{U}E}$
- Verdampferaustrittsüberhitzung $T_{\ddot{U}A}$ = Messwert Verdampferaustrittsüberhitzung - Zielwert Verdampferaustrittsüberhitzung $Z_{T\ddot{U}A}$

Dann wird vorteilhaft aus dem gewichteten Einfluss von der Regelabweichung der Verdichtereintrittsüberhitzung $T_{\ddot{U}E}$ und dem gewichteten Einfluss der Regelabweichung der Verdampferaustrittsüberhitzung $T_{\ddot{U}A}$ im Regler 500 die Gesamtregelabweichung berechnet, welche zur Regelung des Dampfkompressionskreises 200 eingespeist wird.

Beim Dampfkompressionskreis 200 passiert das Kältemittel nach der Entspannung durch das Expansionsventil 230 zwei sequentiell angeordnete Wärmeübertrager, den Verdampfer 240 und den Rekuperator 250 in welchen dem Kältemittel Wärmeenergie $Q_Q$ und $Q_i$ zugeführt wird.

Im Verdampfer 250 wird dem Kältemittel Quellwärmeenergie $Q_Q$ aus dem Wärmequellsystem 300 zugeführt. Das Temperaturniveau der zugeführten Quellwärme $Q_Q$ ist auf einem Temperaturniveau der Wärmequelle, insbesondere wie des Erdreiches oder der Aussenluft.

In dem in Kältemittel Hochdruck-Strömungsrichtung $S_{HD}$ nachfolgenden Rekuperator 250 wird dem Kältemittel Wärmeenergie $Q_i$ nach Verlassen des Verflüssigers 220 zugeführt. Das Temperaturniveau des Kältemittels am Austritt des Verflüssigers stellt sich in etwa auf Höhe der Rücklauftemperatur des Heizmediums ein.

Diese Verschaltung des Verdampfers 240 mit dem Rekuperator 250 in Reihe hat einen entscheidenden Einfluss auf die Übertragungsfunktion der Regelstrecke für die Regelung Verdichtereintrittsüberhitzung $T_{\ddot{U}E}$.

Der Regelwert R ist vorteilhaft die gewichtete Verknüpfung der Regelabweichung der Verdichtereintrittsüberhitzung $T_{\ddot{U}E}$ mit der Regelabweichung der Verdampferaustrittsüberhitzung.

Aktoren mit einem Einfluss auf den Regelwert R, insbesondere der Verdichtereintrittsüberhitzung $T_{\ddot{U}E}$, sind im betreffenden Dampfkompressionskreis 200 durch die Verdichterdrehzahl und/oder den Öffnungsgrad des Expansionsventils 230 beeinflusst, womit auch vorteilhaft der Niederdruck ND und das Verdampfungstemperaturniveau bestimmt sind.

Besonders vorteilhaft haben Aktoren Einfluss auf den Regelwert R, insbesondere auf die gewichtete Verknüpfung der Regelabweichung der Verdichtereintrittsüberhitzung mit der Regelabweichung der Verdampferaustrittsüberhitzung. Im betreffenden Dampfkompressionskreis 200 sind insbesondere der Verdichter 210 durch die Variation der Verdichterdrehzahl und das Expansionsventil 230 durch Beeinflussung des Öffnungsgrades solche Aktoren. Diese beiden Aktoren beeinflussen den Niederdruck ND und das Verdampfungstemperaturniveau.

Vorteilhaft wird im Dampfkompressionskreis 200 die Verdichterdrehzahl so eingestellt, dass die vom Dampfkompressionskreis 200 an das Heizmedium übertragene Heizleistung QH dem angeforderten Zielwert Z entspricht. Zur Einhaltung dieser Vorgabe ist eine Beeinflussung der Verdichterdrehzahl zur Regelung der Verdichtereintrittsüberhitzung $T_{\ddot{U}E}$ vorteilhaft untergeordnet oder nicht angebracht.

Vorteilhaft wird der Öffnungsgrad des Expansionsventils 230 als Stellwert für die Regelung der Verdichtereintrittsüberhitzung $T_{\ddot{U}E}$ verwendet. Der Einfluss des Öffnungsgrades des Expansionsventils 230 auf die Verdichtereintrittsüberhitzung $T_{\ddot{U}E}$ vollzieht sich wie folgt:

Das Expansionsventil 230 agiert als Düse mit elektromotorisch verstellbarem Düsenquerschnitt, bei welchem üblicherweise mittels eines Schrittmotor eine nadelförmige Düsennadel per Gewinde in einen Düsensitz gefahren wird.

Der Kältemitteldurchsatz durch das Expansionsventil ist bei Betrieb mit flüssigem Kältemittel am Expansionsventileintritt 231 in etwa proportional zur Quadratwurzel des Druckunterschiedes zwischen dem Expansionsventileintritt 231 und -austritt 232 multipliziert mit einem aktuellen relativen Wert des Düsenquerschnitts oder Öffnungsgrads und vorteilhaft einer vom Kältemittel - und einer Geometrie des Expansionsventils 230 abhängigen Konstante.

Da bei einer in einem Arbeitspunkt als konstant angenommener Heizmediumtemperatur $T_{WS}$ auch der korrespondierende Niederdruck ND des Kältemittels beim Eintritt in das Expansionsventil 230 als konstant angenommen werden kann, beeinflusst der Öffnungsgrad des Expansionsventil 230 maßgeblich nur den Niederdruck ND, also des Austrittsdruck aus dem Expansionsventil 230.

Wird der Öffnungsgrad des Expansionsventils 230 verringert, so passiert weniger Kältemittel bei konstantem Hochdruck HD und zunächst noch konstantem Niederdruck ND das Expansionsventil 230. Da der Verdichter 210 aber weiterhin zunächst den gleichen Kältemittelmassenstrom fördert, wird in Hochdruck-Strömungsrichtung SHD durch das Expansionsventil 230 weniger Kältemittel zugeführt, als vom Verdichter 210 abgesaugt wird. Da es sich bei Kältemitteldampf um ein kompressibles Medium handelt, sinkt dann der Niederdruck ND auf der Niederdruckseite des Dampfkompressionskreises 200. Bei sinkendem Niederdruck ND sinkt in etwa proportional die Massenstrom von Kältemittel durch den Verdichter 210, da dessen Förderleistung sich angenähert als Rauminhalt / Zeit beschreiben lässt, beding durch insbesondere die Kolbenhübe, und es stellt sich ein entsprechend reduzierter Niederdruckwert ND ein, bei welchem der durch das Expansionsventil 230 zugeführte Kältemittelmassenstrom gleich dem vom Verdichter 210 abgeführten Kältemittelmassenstrom ist.

Wird der Öffnungsgrad des Expansionsventils 230 vergrößert, so passiert mehr Kältemittel bei konstantem Hochdruck HD und zunächst noch konstantem Niederdruck ND das Expansionsventil 230. Da der Verdichter 210 aber weiterhin zunächst den gleichen Kältemittelmassenstrom fördert, wird der Niederdruckseite ND des Kältekreises durch das Expansionsventil 230 mehr Kältemittel zugeführt, als vom Verdichter 210 abgesaugt wird. Da es sich beim Kältemitteldampf um ein kompressibles Medium handelt, steigt der Niederdruck ND auf der Niederdruckseite des Dampfkompressionskreises 200. Bei steigendem Niederdruck ND steigt die Massenstromförderleistung des Verdichters 210 in etwa proportional, da dessen Förderleistung sich angenähert als Rauminhalt / Zeit beschreiben lässt, und es stellt sich ein entsprechen erhöhter Niederdruck ND ein, bei welchem der durch das Expansionsventil 230 zugeführte Kältemittelmassenstrom gleich dem vom Verdichter 210 abgeführte Kältemittelmassenstrom ist.

Der Niederdruck ND wiederum beeinflusst maßgeblich die Wärmeübertragung zwischen Wärmequellenmedium und Kältemittel im Verdampfer 240. Der Wärmestrom $Q_Q$ aus dem Wärmequellsystem 300 wird zwischen dem Wärmequellmedium und dem Kältemittel mit unterschiedlicher Temperatur übertragen, wobei der Wärmestrom $Q_Q$ dabei abhängig vom der Temperaturdifferenz zwischen dem Wärmequellmedium und dem Kältemittel und dem Wärmeübergangswiderstand einer Wärmeübertragungsschicht des Verdampfers 240.

Der Wärmeübergangswiderstand zwischen Wärmequellenmedienpfad des Verdampfers und Kältemittelpfad des Verdampfers ist in einem jeweiligen Dampfkompressionskreis 200 als in etwa konstant anzunehmen. Daher ist die Größe der Wärmeübertragungsleistung im Verdampfer 240 maßgeblich abhängig vom Integral der Temperaturdifferenzen aller Flächenelemente der Wärmeübertragungsschicht.

Um ein hinreichendes Maß von Wärmeenergie $Q_Q$ vom Wärmequellesystem 300 an das Kältemittel übertragen zu können, muss sichergestellt sein, dass die Temperatur des Wärmequellenmediums in möglichst allen Flächenelementen der Übertragungsschicht des Wärmeübertragers, hier des Verdampfers 240 größer ist als die Temperatur des Kältemittels am jeweiligen Flächenelement.

Ist der Aggregatzustand des Kältemittels beim Durchströmen des Verdampfers 240 gesättigter Dampf, so stellt sich eine Kältemitteltemperatur ein, welche durch die Sättigungsdampfkennlinie als Stoffeigenschaft des Kältemittels eine Funktion des Niederdrucks ND des Kältemittels ist. Somit lässt sich durch eine Steuerung des Niederdruckes ND oder auch eines Verdampfungsdruckes indirekt eine Steuerung der Verdampfungstemperatur des Kältemittels beim Durchströmen des Rekuperators 250 steuern.

Die Wärmeenergie $Q_Q$, welche vom Wärmequellensystem an das den Verdampfer 240 durchströmende Kältemittel übertragen wird, bewirkt eine Aggregatzustandsbeeinflussung des Kältemittels.

Der Nassdampfanteil im gesättigten Kältemitteldampf nimmt bei konstantem Niederdruck bei Wärmeübertragung an das Kältemittel ab. Bei einer unvollständigen Verdampfung ist der Nassdampfanteil und damit auch der innere Energiezustand des Kältemittels beim Austritt aus dem Wärmeübertrager eine Funktion vom:

- Nassdampfanteil bei Eintritt in den Verdampfer 240,
- Kältemittelmassenstrom,
- Übertragener Wärmeleistung $Q_Q$, und von einer
- Enthalpiedifferenz im Nassdampfgebiet beim jeweiligen Niederdruck ND, wobei das Kältemittel eine Stoffkonstante als Funktion des Drucks aufweist.

Zur vollständigen Verdampfung erfolgt eine zusätzliche Energiezuführung im Rekuperator 250, um das Kältemittel über den Zustand gesättigten Dampfes hinaus zu überhitzen.

Mit dem Verfahren wird bei gegebenen Betriebsbedingungen des Dampfkompressionskreises 200 in Abhängigkeit der Stellgröße "Öffnungsgrad Expansionsventil 230" ein korrespondierender Kältemittelzustand beim Austritt aus dem Verdampfers 240 eingestellt.

Im eingeschwungenen Zustand ergibt sich hinsichtlich einer Regeltreckensteilheit der "isolierten" Regelstrecke "Verdampfer 240" ein Regelstreckenverhalten mit moderater Steilheit.

Vorteilhaft wird ein Kältemittel, insbesondere als Kältemittel ein Kältemittelgemisch verwendet, welches einen "Temperaturgleit" aufweist, insbesondere wird vorteilhaft R454c verwendet. Vorteilhaft wird bei einem Kältemittelgemisch mit einem Temperaturgleit eine relative Öffnungsgradänderung des Stellorgans Expansionsventil von 1 % rel. mit einer Überhitzungsänderung am Austritt des Kältemittels aus dem Verdampfer üblicherweise mit einer Überhitzungsänderungen von etwa kleiner 1 K eingestellt.

Die Einstellung dieses Zustandes erfolgt vorteilhaft auch durch eine regelungstechnische Beeinflussung wenigsten einer oder mehrerer der verschiedenen folgenden Zeitkonstanten; die letztendlich die Prozessgröße Kältemittelüberhitzung am Verdampferaustritt 242 beeinflussen:

- Eine erste Zeitkonstante bewirkt vorteilhaft eine Verzögerung der mechanischen Öffnungsgradänderung des Expansionsventils 230 durch die Begrenzung der Verfahrgeschwindigkeit durch den Regler 500, der Regelwert R wird in dieser ersten Zeitkonstante Z in der Verfahrgeschwindigkeit durch einen Bremswert reduziert.
- Eine zweite Zeitkonstante wirkt durch den Regler 500 vorgegeben vorteilhaft auf eine verzögerte Einstellung eines korrespondierenden Niederdruckes bei Öffnungsgradänderungen des Expansionsventils 230 aufgrund der Kompressibilität des Kältemitteldampfes bei Niederdruck ND im Niederdruckpfad.
- Eine dritte Zeitkonstante ist vorteilhaft eine thermische Zeitkonstante der Wärmeübertragungsschicht des Verdampfers 240, wobei eine Änderung des Verdampfungsdruckes und damit der Verdampfungstemperatur eine verzögerte Temperaturänderung der Wärmeübertragungsschicht des Verdampfers, welcher oft mehrere Kilogramm Metall hat und des Wärmequellenmediums.
- Eine vierte Zeitkonstante ergibt sich vorteilhaft aus verzögerten Aggregatzustandsänderungen des Kältemittels bei Verdampfungstemperaturänderungen.
- Eine fünfte Zeitkonstante ergibt sich vorteilhaft aus dem Transport des Kältemittels durch den Verdampfer 240 mit einer endlichen Strömungsgeschwindigkeit.

Es stellt sich also vorteilhaft nach Änderung der Stellgröße "Öffnungsgrad des Expansionsventils 230" eine Verzögerung der korrespondierenden Kältemittelzustandsänderung beim Austritt aus dem Verdampferauslass 242 ein und eine Gesamtzeitkonstante $Z_{ges}$ liegt arbeitspunktabhängig vorteilhaft im Bereich von 30 Sekunden bis etwa 5 Minuten.

Nach Durchströmung des Verdampfer 240 tritt das Kältemittel bei Niederdruck ND in den Niederdruckpfad des Rekuperators 250 ein.

Ist der Aggregatzustand des Kältemittels beim Einströmen in den Rekuperators 250 in einem üblichen Betriebsfall, also vorteilhaft entweder gesättigter Dampf mit einem geringem Dampfanteil zwischen 0 bis 20 % oder insbesondere auch vorteilhaft auch bereits überhitztes Kältemittel.

Bei vorteilhaft gesättigtem Dampf stellt sich eine Kältemitteltemperatur ein, welche durch die Sättigungsdampfkennlinie des Kältemittels eine Funktion des Kältemitteldruckes ist. Bei Eintritt von überhitztem Kältemittel wird die Kältemitteltemperatur maximal eine Größe annehmen, welche der Eintrittstemperatur des Wärmequellenmediums entspricht.

Um ein hinreichendes Maß von Wärmeenergie vom Kältemittel des hochdruckseitigen Kältemittelpfad an das Kältemittel des niederdruckseitigen Kältemittelpfad im Rekuperators 250 übertragen zu können, muss sichergestellt sein, dass die Temperatur des Kältemittels des hochdruckseitigen Kältemittelpfads auf Hochdruck HD in möglichst allen Flächenelementen der Übertragungsschicht des Rekuperators 250 größer als die Temperatur des Kältemittels des niederdruckseitigen Kältemittelpfades bei Niederdruck ND am jeweiligen Flächenelement ist.

Die korrespondierenden Temperaturen des Wärmesenkensystems 400 des Dampfkompressionssystems 200 sind in einem Heizfall höher als die korrespondierenden Temperaturen der Wärmequelle wie dem Erdreich oder der Aussenluft.

Die Wärmeenergie $Q_i$, welche vom Kältemittel bei Hochdruck HD des hochdruckseitigen Kältemittelpfads an das Kältemittel bei Niederdruck im niederdruckseitigen Kältemittelpfad des Rekuperators 250 übertragen wird, bewirkt eine Aggregatzustandsbeeinflussung des Kältemittels auf der Niederdruckseite. Der Nassdampfanteil des den Rekuperator 250 niederdruckseitig bei Niederdruck ND durchströmenden Kältemittels nimmt bei einer Wärmeübertragung an das Kältemittel ab und nach einer vollständigen Verdampfung erfolgt vorteilhaft eine Überhitzung des Kältemittels.

Der Innere Energiezustand des Kältemittels, beim Austritt aus dem niederdruckseitigen Pfad des Rekuperators, wird vorteilhaft abhängig von einem oder mehreren der folgenden Faktoren geregelt:

- Nassdampfanteil bei Eintritt in den Rekuperator 250,
- Kältemittelmassenstrom,

EP 3 730 873 B1

- übertragene Wärmeleistung $Q_i$, womit vorteilhaft abhängig von der Temperaturdifferenz zwischen der Temperatur des Kältemittels bei Hochdruck HD im hochdruckseitigen Kältemittelpfad und der Temperatur des Kältemittels des niederdruckseitigen Kältemittelpfades bei Niederdruck ND geregeltwird, und/oder
- eine Enthalpiedifferenz im Nassdampfgebiet beim jeweiligen Niederdruck ND.

Vorteilhaft wird somit bewirkt, dass sich in Abhängigkeit der gegebenen Betriebsbedingungen des Dampfkompressionskreises 200 sowie in Abhängigkeit der Stellgröße "Öffnungsgrad Expansionsventil 230" ein korrespondierender Kältemittelzustand beim Austritt 252 aus dem Rekuperator 250 beim Niederdruck ND einstellt.

Im eingeschwungenen Zustand ergibt sich hinsichtlich Regeltreckensteilheit der "isolierten" Regelstrecke beim Niederdruck ND des Kältemittels im niederdruckseitiger Pfad des Rekuperators 250 ein Regelstreckenverhalten mit hoher Steilheit, bei in etwa gleichbleibendem inneren Energiezustand des Kältemittels beim Eintritt 251 in den niederdruckseitigen ND Pfad des Rekuperators 250. Mit einer insbesondere relativen Öffnungsgradänderung des Expansionsventil von 1 % wird eine Überhitzungsänderung am Austritt des Kältemittels aus dem Verdampfer 230 von vorteilhaft etwa 10 K oder auch über 10 K eingestellt.

Gegenüber dem Rekuperator 250 erfolgt vorteilhaft eine wesentlich höhere Wärmeübertragung im Verdampfer 240 und damit hohe treibende Temperaturdifferenz zwischen dem Quellmedium und dem Kältemittel im Verdampfer 240.

Die Einstellung dieses Zustandes erfolgt hierbei vorteilhaft unter Verwendung wenigstens einer der folgenden Zeitkonstanten Z:

- Mit einer elften Zeitkonstante $Z_{11}$ wird vorteilhaft eine Verzögerung der mechanischen Öffnungsgradänderung des Expansionsventils 230 durch die Begrenzung einer Verfahrgeschwindigkeit vorgegeben.
- Eine zwölfte Zeitkonstante $Z_{12}$ wirkt vorteilhaft auf die verzögerte Einstellung eines korrespondierenden Niederdruckes ND bei Öffnungsgradänderungen des Expansionsventils 230 aufgrund der Kompressibilität des Kältemitteldampfes im Niederdruckpfad ND.
- Eine 13. Zeitkonstante $Z_{13}$ ist eine thermische Zeitkonstante der Wärmeübertragungsschicht des Verdampfers. Somit wird eine Änderung des Verdampfungsdruckes und damit der Verdampfungstemperatur bewirkt eine verzögerte Temperaturänderung der Wärmeübertrageschicht, welche oft mehrere Kilogramm Metall beinhaltet, und des Kältemittels des Hochdruckpfades HD des Rekuperators 250.
- Eine 14. Zeitkonstante $Z_{14}$ wird vorteilhaft aus verzögerten Aggregatzustandsänderungen des Kältemittels bei Verdampfungstemperaturänderungen ermittelt oder vorgegeben.
- Eine 15. Zeitkonstante $Z_{15}$ ergibt sich vorteilhaft aus dem Transport des Kältemittels durch den Verdampfer 240 mit einer endlichen Strömungsgeschwindigkeit und wird berücksichtigt.

Der niederdruckseitige Kältemittelpfad des Rekuperators 250 wird aus dem Verdampferauslass 242 des Verdampfers 240 gespeist. Der innere Energiezustand des Kältemittels wird auch hier bereits durch zumindest zwei Zeitkonstanten Z, $Z_{11}$, $Z_{12}$, $Z_{13}$, $Z_{14}$, $Z_{15}$, $Z_{ges}$ nach Änderung der Stellgröße "Öffnungsgrad Expansionsventil" verzögert.

Nach Änderung der Stellgröße "Öffnungsgrad Expansionsventil 230" stellt sich dann eine weitere Verzögerung der korrespondierenden Kältemittelzustandsänderung durch das Zeitverhalten des Rekuperators 250 beim Austritt aus dem niederdruckseitigen Kältemittelpfad des Rekuperators 250 ein.

Das Zeitverhalten des Rekuperators 250 lässt sich vorteilhaft als Rekuperatorgesamt - Zeitkonstante $Z_{ges}$ abhängig vom jeweiligen Arbeitspunkt des Dampfkompressionskreises im Bereich zwischen in etwa 1 Minuten bis 30 Minuten berücksichtigen.

Es erfolgt vorteilhaft eine gewichtete Kombination Verdichtereintrittsüberhitzung $T_{ÜE}$ und der der Verdampferaustrittsüberhitzung $T_{ÜA}$, indem insbesondere mittels einer gewichteten Kombination der Regelabweichung der Verdichterüberhitzung und der Verdampferaustrittsüberhitzung $T_{ÜA}$ die Gesamtregelabweichung berechnet wird, welche im Regler 500 zur Regelung des Dampfkompressionskreises 200 eingespeist wird.

Die Regelung Verdichtereintrittsüberhitzung $T_{ÜE}$ wird vorteilhaft als der Haupt - Regelgröße verwendet und die korrespondierenden Signalflüsse und Signalverarbeitungen erfolgt insbesondere in den folgenden Verfahrensschritten:

Schritt 1

Zunächst werden die Prozessgrößen Verdichtereintrittsüberhitzung $T_{ÜE}$ vorteilhaft als Hauptregelgröße und die Verdampferaustrittsüberhitzung $T_{ÜA}$ vorteilhaft als Hilfsgröße in einem ersten Verfahrensschritt messtechnisch erfasst.

Dazu wird jeweils eine Verdampfungstemperatur des Kältemittels am jeweiligen Erfassungspunkt entweder

- direkt messtechnisch ermittelt, mit einem Temperatursensor, welcher so positioniert ist, dass er eine der Kältemitteltemperatur im Nassdampfgebiet entsprechende Temperatur erfasst oder
- indirekt messtechnisch ermittelt, mit einem Drucksensor, welcher einen Kältemitteldruck des im Nassdampfgebiet verdampfenden Kältemittels erfasst und aus der kältemittelspezifischen Abhängigkeit zwischen Druck und Temperatur im Nassdampfgebiet dann die Verdampfungstemperatur berechnet wird.

Des Weiteren wird am jeweiligen dem Überhitzungsmesspunkt, insbesondere am Verdampferausgang 242 und/oder am Verdichtereingang 211 zugeordneten Temperaturen der Kältemitteltemperatur mittels Temperatursensoren 501, 508 erfasst. Es wird dann die Temperaturdifferenz des Kältemittels am jeweiligen Messpunkt und der Verdampfungstemperatur berechnet und dieser Temperaturdifferenzwert entspricht dann der jeweiligen Überhitzung des Kältemittels am Messpunkt.

Ausgangsgrößen der Berechnung in Schritt 1 sind dann die Verdichtereintrittsüberhitzung $T_{ÜE}$ und die Verdampferaustrittsüberhitzung $T_{ÜA}$.

Schritt 2

Die Prozessgrößen Verdichtereintrittsüberhitzung $T_{ÜE}$ und Verdampferaustrittsüberhitzung $T_{ÜA}$ werden zur Bildung zugeordneter Regelabweichungen mit jeweils zugeordneten Sollwerten in einem zweiten Schritt vorteilhaft verrechnet:

Der Sollwert für die Verdichtereintrittsüberhitzung $T_{ÜE}$ wird vorteilhaft zur Sicherstellung des zulässigen Verdichtersbetriebsbereiches und eines möglichst hohen Wirkungsgrades des Kältekreises im Bereich zwischen ca. 5 K bis 20 K variiert.

Der Sollwert für die Verdampferaustrittsüberhitzung $T_{ÜA}$ wird dann in einer optionalen Betriebsart so variiert, dass der Sollwert der Verdampferaustrittsüberhitzung im eingeschwungenen Regelfall in etwa dem sich einstellenden Prozesswert der Verdampferaustrittsüberhitzung $T_{ÜA}$ entspricht. Dieser Sollwert für die Verdampferaustrittsüberhitzung $T_{ÜA}$ kann modellbasiert in Abhängigkeit von einer Betriebsart oder einem Arbeitspunkt abhängig von der Verdampfungstemperatur, der Kondensationstemperatur, der Verdichterleistung, einem Sollwert der Verdichtereintrittsüberhitzung $T_{ÜE}$ und/oder von Komponenteneigenschaften vorberechnet werden und adaptiv korrigiert werden.

Es wird dann die Regelabweichung der Verdichtereintrittsüberhitzung $T_{ÜE}$ berechnet, indem vom Prozesswert der Verdichtereintrittsüberhitzung $T_{ÜE}$ der Sollwert der Verdichtereintrittsüberhitzung $T_{ÜE}$ subtrahiert wird.

Es wird dann die Regelabweichung der Verdampferaustrittsüberhitzung $T_{ÜA}$ berechnet, indem vom Prozesswert der Verdampferaustrittsüberhitzung $T_{ÜA}$ der Sollwert der Verdampferaustrittsüberhitzung $T_{ÜA}$ subtrahiert wird.

Schritt 3

In einem dritten Verfahrensschritt werden die Regelabweichung der Verdichtereintrittsüberhitzung $T_{ÜE}$ und die Regelabweichung der Verdampferaustrittsüberhitzung $T_{ÜA}$ vorteilhaft zu einer Gesamtregelabweichung-Überhitzung kombiniert.

Die Kombination erfolgt insbesondere mittels einer gewichteten Addition der Einzel - Regelabweichungen.

Der Gewichtungseinfluss ist ein Maß für die anteilige Kombination der Einzel - Regelabweichungen und kann im Extremfall die ausschließliche Einbeziehung nur einer Einzel - Regelabweichung, aber üblicherweise die gewichtete Einbeziehung beider Einzel - Regelabweichungen bewirken.

Vorteilhaft wird der Gewichtungseinfluss als Wert zwischen 0 bis 1, also 0 bis 100 % veranschlagt und dieser Wert wird auf den Grad der Einbeziehung der Regelabweichung der Verdichtereintrittsüberhitzung $T_{ÜE}$ in die Gesamt - Regelabweichung einbezogen, womit sich für die Berechnung der Gesamt - Regelabweichung folgende Abhängigkeit ergibt:

Gesamt – Regelabweichung Überhitzung =

(Gewichtungseinfluss * Regelabweichung Verdichtereintrittsüberhitzung) +

((1 – Gewichtungseinfluss) * Regelabweichung Verdampferaustrittsüberhitzung)

Der Wert des Gewichtungseinfluss kann vorteilhaft von der Betriebsart und/oder dem Arbeitspunkt der Wärmepumpe 100 abhängig variiert werden:

- Beim Betriebsartübergang zwischen Betriebsart = Betrieb mit ausgeschaltetem Verdichter 210 und Betriebsart = Betrieb mit eingeschaltetem Verdichter 210 im Heizbetrieb wird aufgrund der dynamischen Prozesswerteänderungen beim Anfahren des Dampfkompressionssystems 200 vorteilhaft ausschließlich zunächst die Regelabweichung Verdampferaustrittsüberhitzung $T_{ÜA}$ in die Gesamt - Regelabweichung einbezogen, insbesondere ist der Wert eine Gewichtungseinfluss dann zunächst = 0 oder ein Wert vorteilhaft unter 20 %.

- Nach einer Stabilisierungsphase des Dampfkompressionssystems 200 ist es vorteilhaft, nicht spontan auf den für den Regelbetrieb ausgelegten Wert des Gewichtungseinflusses umzuschalten, sondern den Übergang rampenförmig zu gestalten. In diesem Fall ist es vorteilhaft, dass der Wert vom Gewichtungseinfluss vom Startwert = 0, oder einem Wert insbesondere unter 20%, vorteilhaft rampenförmig auf den vorgesehenen Zielwert angehoben werden. Hiermit wird insbesondere eine Werteunstetigkeit bei einem spontanen Umschalten vermieden und somit Regelschwingungen vermieden.

- Der Zielwert des Gewichtungseinflusses wird vorteilhaft an die jeweilige Betriebsart und den Arbeitspunkt angepasst. Betriebspunkte, welche sich durch erhöhte Schwingneigung auszeichnen bedürfen vorteilhaft einer geringeren Gewichtung der Regelabweichung der Verdichtereintrittsüberhitzung $T_{ÜE}$, insbesondere wird hiermit ein Signalverhalten der Verdichtereintrittsüberhitzung $T_{ÜE}$ aufgrund der gegenüber der Verdampferaustrittsüberhitzung $T_{ÜA}$ größeren Signalverzögerung und größeren Streckensteilheit eine Schwingneigung vermieden.

Schritt 4:

In einem vierten Verfahrensschritt wird die berechnete Gesamt - Regelabweichung der Überhitzung dann im Regler 500 verarbeitet, welcher die korrespondierenden Aktoren des Kältekreises, insbesondere das Expansionsventil 230 mit dem stellbarem Öffnungsgrad und/oder den Verdichter 210 mit stellbarer Verdichterdrehzahl so steuert, dass sich im eingeregelten Fall eine Regelabweichung der Überhitzung gleich möglichst etwa 0 Kelvin einstellt.

Dabei kann ein P, I, PI, PID - Regler eingesetzt werden, wobei die Regelanteile an die jeweilige Betriebsart und den Arbeitspunkt vorteilhaft dynamisch angepasst werden.

**Patentansprüche**

1. Verfahren zum Betrieb einer Wärmepumpe (100) mit einem Dampfkompressionssystem (200) in welchem ein gasförmiges Kältemittel von einem mittels eines Reglers (500) gesteuerten Verdichter (210) von einem Niederdruck ND auf einen Hochdruck HD verdichtet wird,

   das Kältemittel durch einen Verflüssiger (220) getrieben wird, in dem es eine Heizwärme $Q_h$ an ein in einem Wärmesenkensystem (400) befindliches Heizmedium abgibt,
   eine innere Wärmeenergie $Q_i$ des Kältemittels in einem Rekuperator (250) beim unter dem Hochdruck HD vom Verflüssiger (220) zu einem Expansionsventil strömenden Kältemittel mit dem mit Niederdruck ND von einem Verdampfer (240) zum Verdichter (210) strömenden Kältemittel ausgetauscht wird,
   wonach das Kältemittel in einer Hochdruckströmungsrichtung $S_{HD}$ zum vom Regler (500) gesteuerten Expansionsventil (230) geführt ist, in dem das Kältemittel vom Hochdruck HD auf den Niederdruck ND abhängig von einem Regelwert R geregelt entspannt wird, wobei
   das auf dem Niederdruck ND befindliche Kältemittel in dem Verdampfer 240 bei Aufnahme von Quellwärme $Q_Q$ verdampft,
   enthaltend die Verfahrensschritte,

      dass eine Regelgröße $R_{ÜA}$ der Verdampferaustrittsüberhitzung $T_{ÜA}$ berechnet wird, mit einem Zielwert $Z_{ÜA}$ für eine Verdampferaustrittsüberhitzung $T_{ÜA}$ eine Regelabweichung der Verdampferaustrittsüberhitzung $T_{ÜA}$ berechnet wird,
      eine Regelgröße $R_{ÜE}$ Verdichtereintrittsüberhitzung $T_{ÜE}$ berechnet wird, mit einem Zielwert $Z_{ÜE}$ für eine Verdichtereintrittsüberhitzung $T_{ÜE}$ eine Regelabweichung der Verdichtereintrittsüberhitzung $T_{ÜE}$ berechnet wird,
      **dadurch gekennzeichnet dass** ein Regelwert R aus einem gewichteten Einfluss der Regelabweichung der Verdampferaustrittsüberhitzung $T_{ÜA}$ mit einem gewichteten Einfluss der Regelabweichung der Verdichtereintrittsüberhitzung $T_{ÜE}$ berechnet wird, und das Expansionsventil (230) auf Basis des Regelwertes R geregelt wird, wobei die Regelabweichungen der Verdampferaustrittsüberhitzung $T_{ÜA}$ und der Verdichtereintrittsüberhitzung $T_{ÜE}$ zur Ermittlung des Regelwertes R mit einem Parameter P gewichtet wird, und

      der Parameter P während einer Betriebsphase nach einer Inbetriebnahmephase gleitend geändert wird, wobei eine Wichtung mittels eines Wichtungskoeffizienten W der Verdichtereintrittsüberhitzung $T_{ÜE}$ mit einem Einfluss von weniger als 20 % gegenüber der Verdampferaustrittsüberhitzung $T_{ÜA}$ beginnt, und während der Inbetriebnahmephase der Wichtungskoeffizient W der Verdichtereintrittsüberhitzung $T_{ÜE}$ auf einen gegenüber der Betriebsphase kleinen Wert zwischen 0 % und 20 % eingestellt ist und nach Ablauf der Inbetriebnahmephase insbesondere rampenförmig mit der Zeit auf einen Zielwert Z für die Betriebsphase ansteigt.

2. Verfahren zum Betrieb einer Wärmepumpe nach Anspruch 1, enthaltend den Verfahrensschritt,
dass die Verdampferaustrittsüberhitzung $T_{\ddot{U}A}$ aus einem Verdampferaustrittstemperaturmesswert $T_{Va}$, der mit einem Verdampferaustrittstemperatursensor (508) gemessen wird, und aus einem Niederdruck ND, der mit einem Niederdrucksensor (502) gemessen wird, ermittelt wird.

3. Verfahren zum Betrieb einer Wärmepumpe nach einem der vorstehenden Ansprüche, enthaltend den Verfahrensschritt,
dass die Verdichtereintrittsüberhitzung $T_{\ddot{U}E}$ aus einer Verdichtereintrittstrittstemperatur $T_{VE}$, gemessen mit einem Verdichtereintrittstemperatursensor (501), und einem Niederdruck ND, der mit einem Niederdrucksensor (502) gemessen wird, ermittelt wird.

4. Verfahren zum Betrieb einer Wärmepumpe (100) nach einem der vorhergehenden Ansprüche

enthaltend den Verfahrensschritt,
dass in einer zeitlich begrenzten Inbetriebnahmephase nach einem Einschalten des Verdichters (210) der Parameterwert P so gesteuert wird, dass die Gewichtung der Verdichtereintrittsüberhitzung $T_{\ddot{U}E}$ zur Ermittlung des Regelwertes R einen Einfluss von 0 % oder nahe 0 % hat, womit ausschließlich oder maßgeblich die Verdampferaustrittsüberhitzung $T_{\ddot{U}A}$ in den Regelwert R einbezogen wird, wobei
in einer darauffolgenden Übergangsphase der Parameter P so gesteuert wird, dass die Gewichtung der Regelgröße der Verdichtereintrittsüberhitzung $T_{\ddot{U}E}$ zur Ermittlung des Regelwertes R bis zu einem Zielwert erhöht wird und
in der darauffolgenden Betriebsphase die Gewichtung Verdichtereintrittsüberhitzung $T_{\ddot{U}E}$ den Zielwert erreicht.

5. Verfahren zum Betrieb einer Wärmepumpe nach einem der vorhergehenden Ansprüche,

enthaltend den Verfahrensschritt,

dass die Regelung eine Verdichtereintrittsüberhitzung $T_{\ddot{U}E}$ als eine Hauptregelgröße verwendet, wobei die korrespondierenden Signalflüsse in vier Verfahrensschritten verarbeitet werden, wobei
in einem Verfahrensschritt 1 zunächst die Prozessgrößen der Verdichtereintrittsüberhitzung $T_{\ddot{U}E}$ als Hauptregelgröße mit der Verdampferaustritts-überhitzung $T_{\ddot{U}A}$ als Hilfsgröße ermittelt werden,

wobei an einem jeweiligen Erfassungspunkt im Nassdampfgebiet eine Verdampfungstemperatur des Kältemittels direkt mittels eines Temperatursensors oder indirekt mittels eines Drucksensors erfasst wird,
und an einem jeweiligen Überhitzungsmesspunkt am Verdampferausgang (242) und am Verdichtereingang (211), die zugeordneten Temperaturen der Kältemitteltemperatur mittels Temperatursensoren (501, 508) erfasst werden, und wobei
die Temperaturdifferenz des Kältemittels am jeweiligen Überhitzungsmesspunkt und der Verdampfungstemperatur berechnet wird,
in einem Verfahrensschritt 2 die Prozessgrößen der Verdichtereintrittsüberhitzung $T_{\ddot{U}E}$ und der Verdampferaustrittsüberhitzung $T_{\ddot{U}A}$ zur Bildung zugeordneter Regelabweichungen mit jeweils zugeordneten Sollwerten verrechnet werden, wobei
der Sollwert für die Verdichtereintrittsüberhitzung $T_{\ddot{U}E}$, insbesondere zur Sicherstellung eines möglichst hohen Wirkungsgrades des Kältekreises, im Bereich zwischen ca. 5 K bis 20 K variiert wird, und der Sollwert für die Verdampferaustrittsüberhitzung TÜA dann so variiert wird, dass der Sollwert der Verdampferaustrittsüberhitzung im eingeschwungenen Regelfall in etwa dem sich einstellenden Prozesswert der Verdampferaustrittsüberhitzung TÜA entspricht, wonach dann die Regelabweichung der Verdichtereintrittsüberhitzung $T_{\ddot{U}E}$ berechnet wird, indem vom Prozesswert der Verdichtereintrittsüberhitzung $T_{\ddot{U}E}$ der Sollwert der Verdichtereintrittsüberhitzung $T_{\ddot{U}E}$ subtrahiert wird, womit
dann die Regelabweichung der Verdampferaustrittsüberhitzung $T_{\ddot{U}A}$ berechnet wird, indem vom Prozesswert der Verdampferaustrittsüberhitzung $T_{\ddot{U}A}$ der Sollwert der Verdampferaustrittsüberhitzung $T_{\ddot{U}A}$ subtrahiert wird,
in einem Verfahrensschritt 3 die Regelabweichung der Verdichtereintrittsüberhitzung $T_{\ddot{U}E}$ und die Regelabweichung der Verdampferaustrittsüberhitzung $T_{\ddot{U}A}$ vorteilhaft unter Berücksichtigung des Gewichtungseinflusses zu einer Gesamtregelabweichung der Überhitzung kombiniert werden, wobei der Gewichtungseinfluss ein Maß für die anteilige Kombination der Einzelregelabweichungen ist und

in einem Verfahrensschritt 4 die berechnete Gesamtregelabweichung der Überhitzung im Regler (500) verarbeitet wird, welcher die korrespondierenden Aktoren des Kältekreises, insbesondere das Expansionsventil (230) mit dem stellbarem Öffnungsgrad und/oder den Verdichter (210) mit stellbarer Verdichterdrehzahl so steuert, dass sich im eingeregelten Fall eine Gesamtregelabweichung der Überhitzung gleich möglichst etwa 0 Kelvin einstellt.

**Claims**

1. Method for operating a heat pump (100) with a vapour compression system (200) in which a gaseous refrigerant is compressed from a low pressure ND to a high pressure HD by a compressor (210) controlled by means of a regulator (500), the refrigerant is driven through a condenser (220), in which it releases heating energy $Q_h$ to a heating medium located in a heat sink system (400),

   an internal thermal energy $Q_i$ of the refrigerant is exchanged in a recuperator (250) between the refrigerant flowing under high pressure HD from the condenser (220) to an expansion valve and the refrigerant flowing under low pressure ND from an evaporator (240) to the compressor (210),
   whereupon the refrigerant is fed in a high pressure flow direction $S_{HD}$ to the expansion valve (230) controlled by the controller (500), in which the refrigerant is expanded from high pressure HD to low pressure ND in a controlled manner depending on a control value R, wherein
   the refrigerant at the low pressure ND evaporates in the evaporator 240 upon absorption of source heat $Q_Q$, including the method steps

   that a control variable $R_{ÜA}$ of the evaporator discharge superheating $T_{ÜA}$ is calculated, a control deviation of the evaporator discharge superheating $T_{ÜA}$ is calculated with a target value $Z_{ÜA}$ for an evaporator discharge superheating $T_{ÜA}$,
   a control variable $R_{ÜE}$ of the compressor intake superheating $T_{ÜE}$ is calculated, a control deviation of the compressor intake superheating $T_{ÜE}$ is calculated with a target value $Z_{ÜE}$ for a compressor intake superheating $T_{ÜE}$,
   **characterised in that**
   a control value R is calculated from a weighted influence of the control deviation of the evaporator discharge superheating $T_{ÜA}$ with a weighted influence of the control deviation of the compressor intake superheating $T_{ÜE}$, and

   the expansion valve (230) is controlled on the basis of the control value R, wherein
   the control deviations of the evaporator discharge superheating $T_{ÜA}$ and the compressor intake superheating $T_{ÜE}$ are weighted with a parameter P to determine the control value R, and
   the parameter P is changed in a modulating manner during an operating phase after a commissioning phase, wherein weighting by means of a weighting coefficient W of the compressor intake superheating $T_{ÜE}$ begins with an influence of less than 20 % compared to the evaporator discharge superheating $T_{ÜA}$, and
   during the commissioning phase, the weighting coefficient W of the compressor intake superheating $T_{ÜE}$ is set to a value between 0 % and 20 % that is low in comparison with the operating phase, and after the commissioning phase has elapsed, it increases over time, in particular in a ramp-shaped manner, to a target value Z for the operating phase.

2. Method for operating a heat pump according to claim 1, including the method step
   that the evaporator discharge superheating $T_{ÜA}$ is determined from an evaporator discharge temperature measured value $T_{Va}$, which is measured with an evaporator discharge temperature sensor (508), and from a low pressure ND, which is measured with a low pressure sensor (502).

3. Method for operating a heat pump according to any one of the preceding claims, including the method step
   that the compressor intake superheating $T_{ÜE}$ is determined from a compressor intake temperature $T_{VE}$, measured with a compressor intake temperature sensor (501), and a low pressure ND, which is measured with a low pressure sensor (502).

4. Method for operating a heat pump (100) according to any one of the preceding claims

   including the method step

that, in a time-limited commissioning phase after the compressor (210) has been switched on, the parameter value P is controlled in such a way that the weighting of the compressor intake superheating $T_{ÜE}$ for determining the control value R has an influence of 0 % or close to 0 %, with the result that the evaporator discharge superheating $T_{ÜA}$ is exclusively or significantly included in the control value R, wherein

in a subsequent transition phase, the parameter P is controlled in such a way that the weighting of the control variable of the compressor intake superheating $T_{ÜE}$ for determining the control value R is increased up to a target value and

in the subsequent operating phase, the weighting of the compressor intake superheating $T_{ÜE}$ reaches the target value.

5. Method for operating a heat pump according to any one of the preceding claims,

including the method step

that the control uses a compressor intake superheating $T_{ÜE}$ as a main control variable, wherein the corresponding signal flows are processed in four method steps, wherein
in a method step 1, the process variables of the compressor intake superheating $T_{ÜE}$ are first determined as the main control variable with the evaporator discharge superheating $T_{ÜA}$ as an auxiliary variable,

whereby at a respective detection point in the wet vapour area, an evaporation temperature of the refrigerant is detected directly by means of a temperature sensor or indirectly by means of a pressure sensor, and
at a respective superheating measuring point at the evaporator discharge (242) and at the compressor intake (211), the associated temperatures of the refrigerant temperature are detected by means of temperature sensors (501, 508), and wherein
the temperature difference of the refrigerant at the respective superheating measuring point and the evaporation temperature is calculated,
in a method step 2, the process variables of the compressor intake superheating $T_{ÜE}$ and the evaporator discharge superheating $T_{ÜA}$ are calculated to form associated control deviations with associated setpoints, wherein
the setpoint for the compressor intake superheating $T_{ÜE}$, in particular to ensure the highest possible efficiency of the refrigerant circuit, is varied in the range between approx. 5 K to 20 K, and the setpoint value for the evaporator discharge superheating $T_{ÜA}$ is then varied so that the setpoint value of the evaporator discharge superheating in the steady-state control case corresponds approximately to the resulting process value of the evaporator discharge superheating $T_{ÜA}$, after which the control deviation of the compressor intake superheating $T_{ÜE}$ is then calculated by subtracting the setpoint value of the compressor intake superheating $T_{ÜE}$ from the process value of the compressor intake superheating $T_{ÜE}$, whereby
then the control deviation of the evaporator discharge superheating $T_{ÜA}$ is calculated by subtracting the setpoint value of the evaporator discharge superheating $T_{ÜA}$ from the process value of the evaporator discharge superheating $T_{ÜA}$,

in a method step 3, the control deviation of the compressor intake superheating $T_{ÜE}$ and the control deviation of the evaporator discharge superheating $T_{ÜA}$ are advantageously combined to form an total control deviation of the superheating, taking into account the weighting influence, wherein the weighting influence is a measure of the proportional combination of the individual control deviations, and
in a method step 4, the calculated total control deviation of the superheating is processed in the controller (500), which controls the corresponding actuators of the refrigerant circuit, in particular the expansion valve (230) with the adjustable degree of opening and/or the compressor (210) with adjustable compressor speed, in such a way that in the adjusted case a total control deviation of the superheating equal to approximately 0 Kelvin is set.

**Revendications**

1. Procédé de fonctionnement d'une pompe à chaleur (100) dotée d'un système de compression de vapeur (200), dans lequel un fluide frigorigène à l'état gazeux est comprimé d'une basse pression ND à une haute pression HD par un compresseur (210) commandé au moyen d'un régulateur (500),

le fluide frigorigène est amené à traverser un condenseur (220) dans lequel il transfère de la chaleur de chauffage

$Q_h$ à un fluide de chauffage se trouvant dans un système dissipateur de chaleur (400),
une énergie thermique interne $Q_i$ du fluide frigorigène est échangée dans un récupérateur (250) entre le fluide frigorigène circulant à haute pression HD depuis le condenseur (220) vers un détendeur et le fluide frigorigène circulant à basse pression ND depuis un évaporateur (240) vers le compresseur (210),
après quoi le fluide frigorigène est mené dans une direction d'écoulement à haute pression $S_{HD}$ jusqu'au détendeur (230) commandé par le régulateur (500) et dans lequel le fluide frigorigène est détendu de la haute pression HD à la basse pression ND de manière régulée en fonction d'une valeur de régulation R, sachant que le fluide frigorigène à basse pression ND s'évapore dans l'évaporateur 240 en absorbant de la chaleur source $Q_Q$, comportant les étapes de procédé selon lesquelles

une grandeur de régulation $R_{ÜA}$ de la surchauffe de sortie d'évaporateur $T_{ÜA}$ est calculée, un écart de régulation de la surchauffe de sortie d'évaporateur $T_{ÜA}$ est calculé avec une valeur cible $Z_{ÜA}$ pour une surchauffe de sortie d'évaporateur $T_{ÜA}$,
une grandeur de régulation $R_{ÜE}$ de la surchauffe d'entrée de compresseur $T_{ÜE}$ est calculée, un écart de régulation de la surchauffe d'entrée de compresseur $T_{ÜE}$ est calculé avec une valeur cible $Z_{ÜE}$ pour une surchauffe d'entrée de compresseur $T_{ÜE}$,
**caractérisé en ce que**
une valeur de régulation R est calculée à partir d'une influence pondérée de l'écart de régulation de la surchauffe de sortie d'évaporateur $T_{ÜA}$ avec une influence pondérée de l'écart de régulation de la surchauffe d'entrée de compresseur $T_{ÜE}$, et

le détendeur (230) est régulé en fonction de la valeur de régulation R,
les écarts de régulation de la surchauffe de sortie d'évaporateur $T_{ÜA}$ et de la surchauffe d'entrée de compresseur $T_{ÜE}$ étant pondérés par un paramètre P pour déterminer la valeur de régulation R, et
le paramètre P est modifié de manière glissante pendant une phase de fonctionnement après une phase de mise en service, une pondération au moyen d'un coefficient de pondération W de la surchauffe d'entrée de compresseur $T_{ÜE}$ commençant avec une influence inférieure à 20 % par rapport à la surchauffe de sortie d'évaporateur $T_{ÜA}$, et
pendant la phase de mise en service, le coefficient de pondération W de la surchauffe d'entrée de compresseur $T_{ÜE}$ est réglé sur une valeur faible, comprise entre 0 % et 20 %, par rapport à la phase de fonctionnement et augmente au terme de la phase de mise en service, notamment sous forme de rampe, progressivement jusqu'à une valeur cible Z pour la phase de fonctionnement.

**2.** Procédé de fonctionnement d'une pompe à chaleur selon la revendication 1, comportant l'étape de procédé selon laquelle
la surchauffe de sortie d'évaporateur $T_{ÜA}$ est déterminée à partir d'une valeur de mesure de température de sortie d'évaporateur $T_{Va}$, mesurée par un capteur de température de sortie d'évaporateur (508), et d'une basse pression ND, mesurée par un capteur de basse pression (502).

**3.** Procédé de fonctionnement d'une pompe à chaleur selon l'une quelconque des revendications précédentes, comportant l'étape de procédé selon laquelle la surchauffe d'entrée de compresseur $T_{ÜE}$ est déterminée à partir d'une température d'entrée de compresseur $T_{VE}$, mesurée par un capteur de température d'entrée de compresseur (501), et d'une basse pression ND, mesurée par un capteur de basse pression (502).

**4.** Procédé de fonctionnement d'une pompe à chaleur (100) selon l'une quelconque des revendications précédentes,

comportant l'étape de procédé selon laquelle
dans une phase de mise en service limitée dans le temps après une mise en marche du compresseur (210), la valeur de paramètre P est commandée de telle sorte que la pondération de la surchauffe d'entrée de compresseur $T_{ÜE}$ a une influence de 0 % ou proche de 0 % pour la détermination de la valeur de régulation R, ce qui permet d'inclure exclusivement ou de manière déterminante la surchauffe de sortie d'évaporateur $T_{ÜA}$ dans la valeur de régulation R, sachant que
dans une phase de transition suivante, le paramètre P est commandé de telle sorte que la pondération de la grandeur de régulation de la surchauffe d'entrée de compresseur $T_{ÜE}$ pour déterminer la valeur de régulation R est augmentée jusqu'à une valeur cible et
dans la phase de fonctionnement suivante, la pondération de la surchauffe d'entrée de compresseur $T_{ÜE}$ atteint la valeur cible.

**5.** Procédé de fonctionnement d'une pompe à chaleur selon l'une quelconque des revendications précédentes,

comportant l'étape de procédé selon laquelle

la régulation utilise une surchauffe d'entrée de compresseur $T_{\ddot{U}E}$ comme grandeur de régulation principale, les flux de signaux correspondants étant traités en quatre étapes de procédé, sachant que dans une étape de procédé 1, les grandeurs de processus de la surchauffe d'entrée de compresseur $T_{\ddot{U}E}$ sont d'abord déterminées comme grandeur de régulation principale avec la surchauffe de sortie d'évaporateur $T_{\ddot{U}A}$ comme grandeur auxiliaire,

une température d'évaporation du fluide frigorigène étant détectée directement au moyen d'un capteur de température ou indirectement au moyen d'un capteur de pression en un point de détection respectif dans le domaine de la vapeur humide, et les températures associées du fluide frigorigène étant détectées au moyen de capteurs de température (501, 508) en un point de mesure de surchauffe respectif à la sortie de l'évaporateur (242) et à l'entrée du compresseur (211), et sachant que la différence de température entre le fluide frigorigène au point de mesure de surchauffe respectif et la température d'évaporation est calculée, dans une étape de procédé **2**, les grandeurs de processus de la surchauffe d'entrée de compresseur $T_{\ddot{U}E}$ et de la surchauffe de sortie d'évaporateur $T_{\ddot{U}A}$ sont combinées dans un calcul avec des valeurs de consigne respectivement associées pour former des écarts de régulation associés, sachant que la valeur de consigne de la surchauffe d'entrée de compresseur $T_{\ddot{U}E}$ varie entre environ 5 K et 20°K, notamment pour assurer un rendement aussi élevé que possible du circuit frigorifique, et la valeur de consigne de la surchauffe de sortie d'évaporateur TÜA est alors modifiée de telle sorte que la valeur de consigne de la surchauffe de sortie d'évaporateur corresponde à peu près, dans le cas de régulation en régime établi, à la valeur de processus de la surchauffe de sortie d'évaporateur TÜA obtenue, après quoi l'écart de régulation de la surchauffe d'entrée de compresseur $T_{\ddot{U}E}$ est calculé en soustrayant la valeur de consigne de la surchauffe d'entrée de compresseur $T_{\ddot{U}E}$ de la valeur de processus de la surchauffe d'entrée de compresseur $T_{\ddot{U}E}$, moyennant quoi l'écart de régulation de la surchauffe de sortie d'évaporateur $T_{\ddot{U}A}$ est alors calculé en soustrayant la valeur de consigne de la surchauffe de sortie d'évaporateur $T_{\ddot{U}A}$ de la valeur de processus de la surchauffe de sortie d'évaporateur $T_{\ddot{U}A}$,

dans une étape de procédé **3**, l'écart de régulation de la surchauffe d'entrée de compresseur $T_{\ddot{U}E}$ et l'écart de régulation de la surchauffe de sortie d'évaporateur $T_{\ddot{U}A}$ sont avantageusement combinés en tenant compte de l'influence de pondération pour former un écart de régulation global de la surchauffe, l'influence de pondération étant une valeur indicative de la combinaison proportionnelle des écarts de régulation individuels et dans une étape de procédé **4**, l'écart de régulation global calculé de la surchauffe est traité dans le régulateur (500), qui commande les actionneurs correspondants du circuit frigorifique, notamment le détendeur (230) à degré d'ouverture réglable et/ou le compresseur (210) à régime réglable, de telle sorte que, dans le cas réglé, un écart de régulation global de la surchauffe se règle au plus près possible d'environ 0 Kelvin.

Fig. 1

Fig. 2

**IN DER BESCHREIBUNG AUFGEFÜHRTE DOKUMENTE**

**In der Beschreibung aufgeführte Patentdokumente**

- DE 10159892 A1
- DE 102005061480 B3
- US 2008223056 A1
- JP H01102255 A
- EP 1014013 A1
- US 2013074535 A1
- WO 03106900 A1